# FASCICULE DE BREVET EUROPEEN

(11) **EP 3 610 577 B1**
(45) Date de publication et mention de la délivrance du brevet: **05.07.2023**
(21) Numéro de dépôt: 18714802.8
(22) Date de dépôt: 09.04.2018
(51) Int. Cl.: H04B 5/00

(54) **ANTENNE CONFIGURÉE POUR ÊTRE CONFORMÉE À UNE SURFACE TRANSPARENTE, DISPOSITIF D'AFFICHAGE ET DISPOSITIF DE PAIEMENT ÉLECTRONIQUE CORRESPONDANTS**
ANTENNE IN FORM EINER TRANSPARENTEN OBERFLÄCHE, ENTSPRECHENDE ANZEIGEVORRICHTUNG UND ENTSPRECHENDE ELEKTRONISCHE ZAHLUNGSVORRICHTUNG
ANTENNA CONFIGURED TO CONFORM TO A TRANSPARENT SURFACE, CORRESPONDING DISPLAY DEVICE AND CORRESPONDING ELECTRONIC PAYMENT DEVICE

(30) Priorité: 10.04.2017 FR 1753120
(43) Date de publication de la demande: 19.02.2020
(73) Titulaire: Banks and Acquirers International Holding, 75015 Paris (FR)
(72) Inventeur: PAVAGEAU, Stéphane, 26600 La Roche de Glun (FR)
(74) Mandataire: Germain Maureau
(86) Numéro de dépôt international: PCT/EP2018/059042
(87) Numéro de publication internationale: WO 2018/189117

(56) Documents cités:
- EP-A1- 1 868 263
- US-A1- 2014 327 598

## Description

### 1 DOMAINE TECHNIQUE

Le domaine de l'invention est celui des antennes pour les communications sans fil à courte ou faible distance.

Plus précisément, l'invention concerne une telle antenne configurée pour être associée à une surface devant être vue d'un utilisateur, par exemple un écran d'affichage.

L'invention a ainsi de nombreuses applications, notamment, mais non exclusivement, dans le cadre de dispositifs de paiements électronique embarquant une technologie de paiement dite sans contact, ou d'écrans publicitaires proposant à un utilisateur d'obtenir des informations additionnelles sur les produits affichés moyennant un échange d'information entre son smartphone et la puce NFC^{®} (pour « Near Field Communication » en anglais) embarquée sur l'affiche.

### 2 ARRIERE-PLAN TECHNOLOGIQUE

Lorsqu'un dispositif d'affichage intègre une antenne pour les communications sans fil à courte ou faible distance, e.g. une antenne NFC, se pose la problématique de l'intégration de cette antenne vis-à-vis à la fois de la gêne occasionnée à un utilisateur cherchant à voir les informations affichées et des performances de l'antenne elle-même.

Ainsi, une première solution connue pour permettre l'intégration d'une antenne NFC sans toutefois gêner l'utilisateur lorsqu'il cherche à voir les informations affichées sur le dispositif d'affichage est de disposer l'antenne derrière l'écran d'affichage du dispositif en question. Cependant, il apparaît que le fonctionnement de l'écran et de l'électronique correspondant perturbent et/ou absorbent la communication entre l'émetteur et le récepteur, dégradant ainsi la qualité du lien NFC.

Une autre solution connue consiste à disposer l'antenne sur le pourtour de l'écran du dispositif d'affichage. Cependant, l'objectif visé lors de l'intégration d'une telle technologie de communications sans fil à courte ou faible distance est souvent que l'utilisateur puisse accéder à une information en disposant son terminal (e.g. son smartphone) à un endroit précis de l'écran d'affichage, cet endroit pouvant dépendre du contenu affiché. Lorsque la taille de l'écran augmente, il est ainsi difficile, pour ne pas dire impossible de garantir une uniformité de champ sur l'ensemble de la surface de l'écran d'affichage à partir d'une antenne disposée sur le pourtour de cet écran. Plus particulièrement, le champ magnétique s'écroule au centre de l'écran à partir d'une certaine taille d'écran.

Par ailleurs, des tentatives ont été faites pour obtenir des matériaux conducteurs qui permettent de fabriquer des éléments rayonnants transparents pouvant être disposés directement sur un écran d'affichage. De tels matériaux sont par exemple l'oxyde d'indium, le graphène ou le nanomesh de cuivre. Cependant, il apparaît que les conducteurs obtenus sont trop résistifs pour permettre d'envisager une implémentation réaliste de l'antenne. En effet, le champ généré étant proportionnel au courant circulant dans l'antenne, cela nécessiterait une puissance extrêmement importante pour obtenir la valeur de champ voulue (ou une tension très élevée), pas toujours compatible avec le fonctionnement des circuits intégrés dédiés aux communications sans fil à courte ou faible distance du type NFC.

La demande EP1868263 A1 décrit une antenne d'une structure à mailles. U La demande US2014/327598 A1 décrit une antenne mise en place dans des rainures dans une surface transparente. U

Il existe ainsi un besoin pour une antenne minimisant la gêne occasionnée à un utilisateur regardant des informations présentées sur un dispositif d'affichage auquel est intégrée l'antenne en question.

Il existe également un besoin pour que le lien radiofréquence entre l'antenne en question et l'émetteur/récepteur avec lequel elle communique ne soit pas dégradé lorsque l'antenne est intégrée au dispositif d'affichage.

Il existe également un besoin pour que ces objectifs soient atteints indépendamment de la taille de l'écran du dispositif d'affichage.

### 3 RESUME

L'invention est définie dans la revendication indépendante 1.

Dans un mode de réalisation de la technique décrite, il est proposé une antenne configurée pour être conformée à une surface transparente. Une telle antenne comprend au moins un brin conducteur électrique s'étendant le long de la surface, une section transverse de l'au moins un brin conducteur électrique présentant une hauteur dans une direction orthogonale à la surface, au moins cinq fois supérieure à une largeur, et de préférence dix fois supérieure, dans une direction parallèle à ladite surface.

Ainsi, l'invention propose une solution nouvelle et inventive pour une antenne conformée à une surface transparente permettant de réduire la gêne occasionnée par sa présence lorsqu'un utilisateur regarde à travers la surface en question.

En effet, pour des raisons de simplicité de réalisation et de profilage de la solution, les antennes conformées à une surface sont classiquement implémentées sous forme d'antennes dont les éléments rayonnants sont des pistes de circuits imprimés. De telles antennes comprennent ainsi des conducteurs sensiblement plats et parallèles à la surface.

Or, la technique décrite propose d'implémenter le même type de conducteurs électriques composant l'antenne perpendiculairement à la surface en question.

Ainsi, la zone d'opacité engendrée par la présence de l'antenne est réduite, en particulier lorsque l'utilisateur regarde à travers la surface en question depuis une direction sensiblement perpendiculaire à cette dernière tout en permettant de maintenir l'impédance de l'antenne suffisamment basse pour des applications du type N FC.

Selon un exemple qui ne fait pas partie de la présente invention, l'au moins un brin conducteur électrique est en contact avec un premier milieu transparent d'indice optique *n*₁ > 1,4 au niveau d'au moins une première zone de contact s'étendant au moins en partie perpendiculairement à la surface.

Ainsi, la hauteur effective *h_{eff}* (i.e. telle que vue par un utilisateur regardant à travers la surface selon une plage d'angles de vue *i*₁ par rapport à la normale de la surface) est inférieure à la hauteur réelle de l'antenne, rendant l'antenne quasiment invisible pour cet utilisateur.

Selon l'invention, l'au moins un brin conducteur électrique est en contact avec un deuxième milieu transparent d'indice optique *n*₂ ≥ 1 au niveau d'au moins une deuxième zone de contact s'étendant au moins en partie perpendiculairement à la surface, le deuxième milieu transparent étant en contact avec un premier milieu transparent d'indice optique *n*₁ > *n*₂ au niveau d'au moins une première zone de contact s'étendant au moins en partie perpendiculairement à la surface. Les première et deuxième zones de contact présentent chacune au moins une région en regard l'une de l'autre.

Ainsi, un aspect « verre brisé » est obtenu sur une plage des angles de vue *i*₁ de l'utilisateur regardant à travers la surface en question, rendant par là-même l'antenne invisible sur cette plage d'angles de vue.

Selon un mode de réalisation, le deuxième milieu transparent est de l'air.

Ainsi, la solution est simple et économique.

Par ailleurs, la différence d'indice optique entre les premier et deuxième milieux transparents est maximisée, ce qui permet d'obtenir l'effet « verre brisé » sur une plus grande plage d'angles de vue i1 par rapport à la normale de la surface.

Selon un mode de réalisation, un brin conducteur électrique parmi l'au moins un brin conducteur électrique comprend une piste conductrice gravée sur un substrat transparent disposé perpendiculairement à la surface, des adhésifs optiques étant disposés sur le substrat transparent de part et d'autre de la piste conductrice, un film d'air étant formé en surface de la piste conductrice lorsque le premier milieu transparent est accolé aux adhésifs optiques.

Ainsi, un film d'air, correspondant au deuxième milieu transparent dans ce mode de réalisation, est aisément constitué lors de l'assemblage du brin conducteur et du premier milieu transparent.

Par ailleurs, l'utilisation d'adhésifs optiques ainsi que d'un substrat transparent (par exemple un substrat poly(téréphtalate d'éthylène) ou PET (pour « polyethylene terephthalate » en anglais)) sur lequel est gravée la piste conductrice (par exemple une piste cuivre), permet d'assurer une continuité optique de part et d'autre de la piste conductrice, renforçant ainsi le caractère invisible de l'antenne pour l'utilisateur regardant à travers la surface.

Selon un mode de réalisation, l'assemblage comprenant le brin conducteur électrique, les adhésifs optiques et le premier milieu transparent est disposé dans une gorge préalablement formée dans un troisième milieu transparent, une résine transparente maintenant l'assemblage dans la gorge.

Ainsi, la fabrication de l'assemblage en question, et donc l'obtention du film d'air correspondant au deuxième milieu transparent est facilitée, car exécutée préalablement à l'insertion de l'assemblage en question dans la gorge.

Selon un mode de réalisation, une zone surfacique du premier milieu transparent est polie au niveau de l'au moins une première zone de contact.

Ainsi, un effet miroir est obtenu au niveau de la zone de contact formant un « poli optique » entre les premier et deuxième milieux transparents, renforçant par là-même le caractère invisible de l'antenne.

Selon un mode de réalisation, le premier milieu transparent ou le troisième milieu transparent comprend une matrice de brins conducteurs électriques comprenant ledit au moins un brin conducteur électrique, l'antenne conformée résultant d'une interconnexion électrique préalable d'une pluralité de brins conducteurs électriques de la matrice.

Ainsi, l'aspect de la surface transparente lié à la présence de l'antenne se trouve uniformisé sur l'ensemble de la surface.

Par ailleurs, la géométrie de la ou des antennes implémentées sur la surface en question est configurable, rendant par là-même la solution flexible et économique.

Selon un mode de réalisation, l'antenne est composée d'au moins deux brins conducteurs électriques formant deux chemins électriques mis en parallèle.

Ainsi, afin de maintenir l'impédance de l'antenne telle que définie, les dimensions de la section des brins la composant se trouvent être divisées dans le rapport du nombre de brins mis en en parallèle. La hauteur effective de la section des brins composant l'antenne ainsi obtenue se trouve être encore réduite.

Selon un mode de réalisation, l'antenne est dimensionnée pour capter et rayonner une onde électromagnétique à une fréquence porteuse de 13,56MHz modulée selon le standard NFC.

La technique décrite concerne également un dispositif d'affichage comprenant :
- un écran d'affichage (520) ; et
- une antenne (selon l'un quelconque des différents modes de réalisation précités) conformée à une surface extérieure de lecture de l'écran d'affichage correspondant à la surface transparente.

Ainsi, l'antenne selon la technique décrite peut être disposée sur un écran d'affichage car son impact est minime sur la visibilité des informations affichées sur l'écran en question.

De la sorte, l'établissement d'un lien radiofréquence avec un dispositif de communication extérieur est optimal, l'antenne selon la technique décrite n'étant pas masquée par l'écran d'affichage.

Cet effet est par ailleurs obtenu indépendamment de la taille de l'écran d'affichage.

La technique décrite concerne également un dispositif de paiement électronique caractérisé en ce qu'il comprend un dispositif d'affichage selon l'un quelconque des différents modes de réalisation précités.

Ainsi, l'utilisation d'un dispositif d'affichage selon la technique décrite permet le paiement sans contact optimal, tout en garantissant une perturbation minimale de la visibilité des informations affichées sur cet écran à destination de l'utilisateur du dispositif de paiement.

### 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :
- les figures 1a et 1b présentent une antenne conformée à une surface transparente selon un mode de réalisation de la technique décrite ainsi qu'un zoom sur un brin conducteur électrique compris dans l'antenne en question ;
- la figure 2 illustre un brin conducteur électrique compris dans une antenne conformée à une surface transparente selon un exemple qui ne fait pas partie de la présente invention
- les figures 3a, 3b et 3c illustrent un brin conducteur électrique compris dans une antenne conformée à une surface transparente selon différents modes de réalisation de la technique décrite ;

- la figure 4 illustre une matrice de brins conducteurs électriques selon un mode de réalisation de la technique décrite ;
- la figure 5 illustre une borne de paiement électronique comprenant un dispositif d'affichage intégrant une antenne conformée à une surface transparente selon un mode de réalisation de la technique décrite.

### 5 DESCRIPTION DETAILLEE DE L'INVENTION

Sur toutes les figures du présent document, les éléments et étapes identiques sont désignés par une même référence.

Le principe général de la technique décrite consiste en une antenne configurée pour être conformée à (i.e. disposée « parallèlement à », ou « le long de ») une surface transparente. Une telle antenne comprend au moins un brin conducteur électrique s'étendant le long de la surface transparente, une section transverse du au moins un brin conducteur électrique présentant une hauteur dans une direction orthogonale à la surface en question, supérieure à une largeur dans une direction parallèle à cette surface. Ainsi, la zone d'opacité engendrée par la présence de l'antenne sur la surface transparente est réduite, en particulier lorsque l'utilisateur regarde à travers la surface en question depuis une direction sensiblement perpendiculaire à cette dernière.

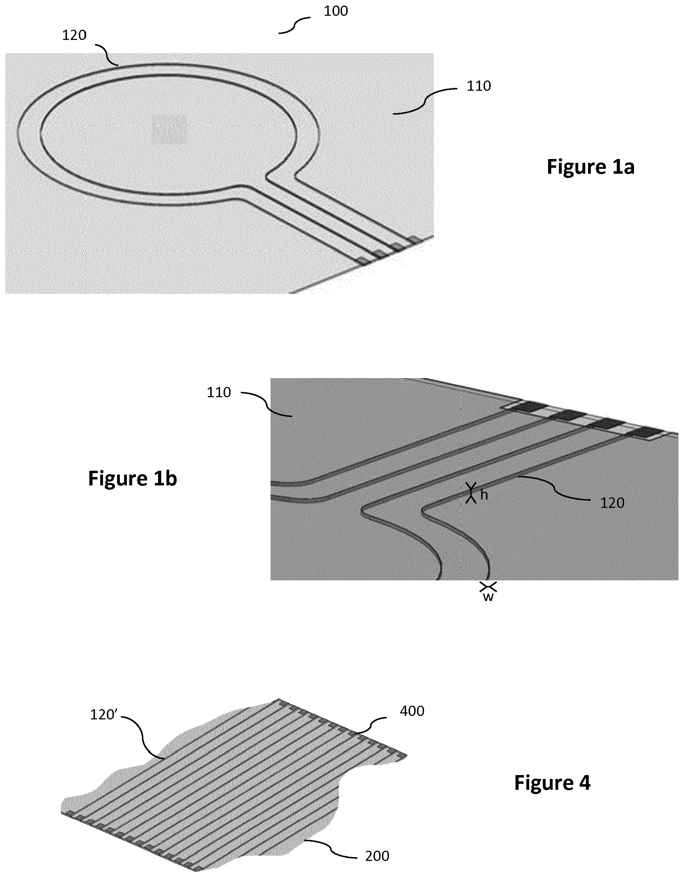

On décrit maintenant, en relation avec les **figures 1a** et **1b****,** une antenne conformée à une surface transparente selon un mode de réalisation de la technique décrite ainsi qu'un zoom sur un brin conducteur électrique compris dans l'antenne en question.

Il est connu d'utiliser une antenne de type boucle, ou double boucle, pour la transmission de données selon le protocole NFC. Les dimensions physiques d'une telle antenne sont guidées à la fois par la qualité du champ obtenu dans la zone de couplage, mais également par l'impédance vue du générateur alimentant l'antenne à la fréquence porteuse de 13,56MHz, cette impédance devant rester faible, typiquement inférieure à 1 Ohm ou 2 Ohm.

Dans le cadre d'une technologie imprimée de type micro-ruban avec pistes en cuivre (technologie classique dans le domaine des transpondeurs NFC), un dimensionnement typique conduit à l'usage d'une piste imprimée de l'ordre de 30µm d'épaisseur dans une direction perpendiculaire au substrat sur lequel la piste est imprimée (i.e. une épaisseur de l'ordre de deux fois l'épaisseur de peau à 13,56MHz pour du cuivre). De même, une largeur classique de piste est de 350µm dans une direction parallèle au substrat sur lequel la piste est imprimée et perpendiculaire à la piste pour une antenne double boucle de diamètre 40mm afin de maintenir l'impédance voulue autour de 1 Ohm.

Lorsque le substrat vient épouser une surface sur laquelle l'antenne doit être disposée, la piste conductrice est alors profilée sur cette surface, i.e. sensiblement parallèle à cette dernière, masquant ainsi en partie la surface en question quand bien même le substrat est implémenté selon un matériau transparent.

A contrario, l'antenne 100 selon la technique décrite dans la présente demande est configurée pour être conformée à une surface 110 transparente et comprend au moins un brin 120 conducteur électrique s'étendant le long de la surface, dont une section transverse présente une hauteur h dans une direction orthogonale à la surface 110, supérieure à une largeur w dans une direction parallèle à la surface 110.

Ainsi, l'antenne connue double boucle NFC décrite ci-dessus peut être adaptée selon la technique décrite de manière à obtenir l'antenne 100 comprenant au moins un brin 120 conducteur électrique présentant une hauteur h de 350µm et une largeur w de 30µm (à titre de comparaison, un cheveu mesure entre 50 et 100µm de diamètre), i.e. un ratio h sur w supérieur à dix afin de maintenir l'impédance de l'antenne inférieure à 1 Ohm. Alternativement, si l'on accepte 2 Ohm comme limite supérieure pour l'impédance de l'antenne, un ratio h sur w supérieur à cinq est suffisant.

Un tel brin 120 conducteur électrique composant l'antenne 100 présente ainsi sa dimension la plus réduite dans la direction parallèle à la surface 110. Ainsi, la zone d'opacité engendrée par la présence de l'antenne 100 est réduite. La gêne occasionnée à un utilisateur regardant au travers de la surface 110 transparente depuis une direction sensiblement perpendiculaire à cette surface 110 est par conséquent très fortement réduite.

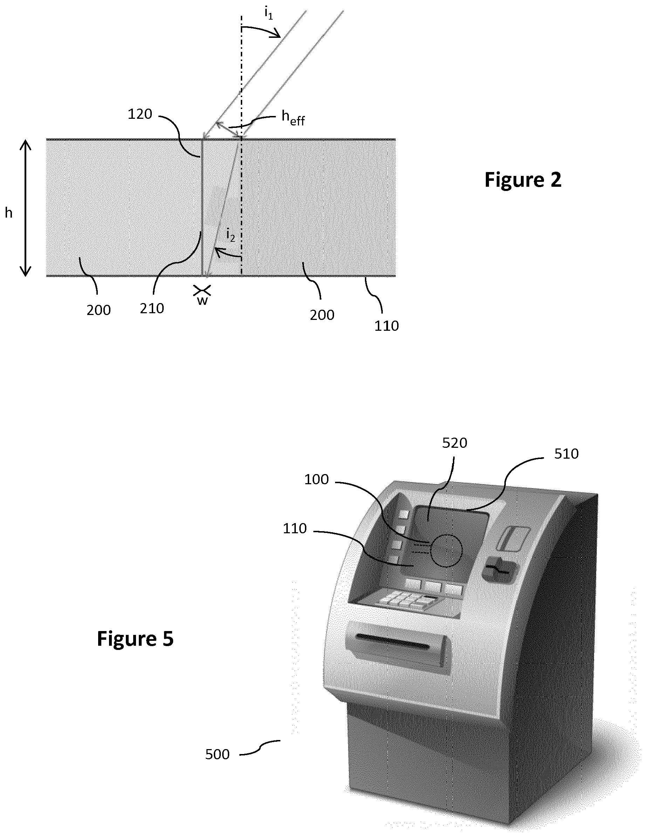

On décrit maintenant, en relation avec la **figure 2****,** un brin conducteur électrique compris dans une antenne conformée à une surface transparente selon un exemple qui ne fait pas partie de la présente invention,

Selon cet exemple, le brin 120 conducteur électrique est en contact avec un premier milieu transparent 200 d'indice optique *n*₁ > 1,4 au niveau d'au moins une première zone de contact 210 s'étendant au moins en partie perpendiculairement à la surface 110 transparente.

Pour ce faire, dans différentes variantes, le brin 120 conducteur électrique est obtenu par :
- surmoulage du premier milieu transparent 200 sur un conducteur électrique ;
- collage transparent (e.g. à laide d'un adhésif optique) d'un conducteur électrique sur une tranche du premier milieu transparent 200 ; ou
- métallisation d'une tranche du premier milieu transparent 200.

Plus particulièrement, le premier milieu transparent 200 est composé d'une matière plastique transparente, par exemple un PC (pour polycarbonate) présentant un indice optique de 1,59, ou un PMMA (pour poly(méthacrylate de méthyle)) présentant un indice optique de 1,49.

Lorsque l'utilisateur regarde à travers la surface 110 selon une plage d'angles de vue *i*₁ donnée par rapport à la normale de la surface, la loi de la réfraction optique (loi dite de Snell-Descartes) conduit l'utilisateur à voir le brin 120 conducteur électrique selon une hauteur effective *h_{eff}* inférieure à la hauteur physique h proportionnellement au sinus de l'indice *n*₁ du premier milieu transparent 200.

A titre d'exemple, le PC présentant un indice optique de 1,59, lorsque ce matériau est utilisé en tant que premier milieu transparent 200 et que l'utilisateur regarde à travers la surface 110 selon un angle de vue *i*₁ égal à 20°, il voit une hauteur effective *h_{eff}* du brin 120 conducteur (en contact avec le premier milieu transparent 200 en PC), de 72µm pour une hauteur physique h de 350µm. La hauteur apparente de l'antenne est donc divisée par quatre, rendant ainsi l'antenne quasiment invisible pour cet utilisateur.

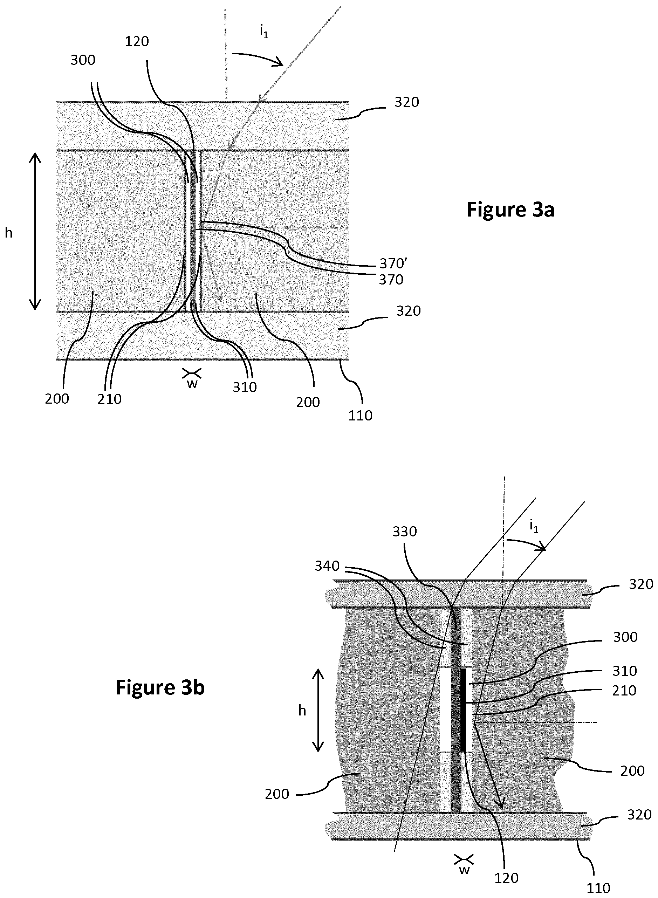

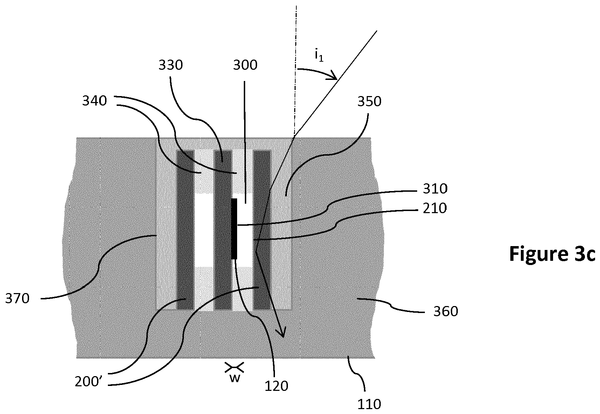

On décrit maintenant, en relation avec les **figures 3a ,3b** **et** **3c****,** un brin conducteur électrique compris dans une antenne conformée à une surface transparente selon d'autres modes de réalisation de la technique décrite.

Dans ces modes de réalisation, le brin 120 conducteur électrique est en contact avec un deuxième milieu transparent 300 d'indice optique *n*₂ ≥ 1 au niveau d'au moins une deuxième zone de contact 310 s'étendant au moins en partie perpendiculairement à la surface 110 transparente.

Par ailleurs, le deuxième milieu transparent 300 est en contact avec un premier milieu transparent 200, 200' d'indice optique *n*₁ > *n*₂ au niveau d'au moins une première zone de contact 210 s'étendant au moins en partie perpendiculairement à la surface 110 transparente.

De même, les première 210 et deuxième 310 zones de contact présentent chacune au moins une région 370, 370' en regard l'une de l'autre. En d'autres termes, elles ne sont pas contenues dans un même plan et sont disposées d'un même côté du brin 120 conducteur électrique afin que l'aspect « verre brisé » obtenu masque effectivement le brin 120 en question.

Ainsi, lorsque l'utilisateur regarde à travers la surface 110 selon une plage d'angles de vue *i*₁ donnée par rapport à la normale de la surface, la loi de la réfraction optique conduit à une réflexion des rayons lumineux au niveau de l'au moins une première zone de contact 210. En d'autres termes, les rayons lumineux n'atteignent jamais le brin 120 conducteur électrique, conduisant à un aspect « verre brisé ». Le brin 120 conducteur électrique est ainsi invisible à l'utilisateur sur la plage d'angles de vue *i*₁ en question.

Selon une variante, le deuxième milieu transparent 300 est de l'air, i.e. un milieu d'indice optique *n*₂ = 1, ou très légèrement supérieur. De la sorte, une importante différence d'indice optique entre les premier 200 et deuxième 300 milieux transparents est obtenue, ce qui permet d'obtenir l'effet « verre brisé » sur une plus grande plage d'angles de vue *i*₁ par rapport à la normale de la surface.

Pour ce faire, selon un premier mode de réalisation (figure 3a), le brin 120 conducteur électrique est disposé entre deux films à bord poli correspondant au premier milieu transparent 200, tout en laissant un film d'air correspondant au deuxième milieu transparent 300, de part et d'autre du brin 120 conducteur électrique. L'ensemble est alors maintenu par collage ou surmoulage de deux films 320, par exemple en plastique transparent (e.g. PC ou PMMA), de part et d'autre de l'assemblage.

Selon un second mode de réalisation (figure 3b), le brin 120 conducteur électrique comprend une piste conductrice gravée (par exemple une piste cuivre) sur un substrat 330 transparent (par exemple un substrat poly(téréphtalate d'éthylène) ou PET (pour « polyethylene terephthalate » en anglais)) disposé perpendiculairement à la surface 110 transparente. Des adhésifs optiques 340 (ou OCA pour « Optical Clear Adhesive » en anglais) sont disposés sur le substrat 330 transparent de part et d'autre de la piste conductrice gravée, sans chevaucher cette même piste). Un film d'air, correspondant au deuxième milieu transparent 300, est alors formé en surface de la piste conductrice lorsque le premier milieu transparent 200 est accolé aux adhésifs optiques 340.

Ainsi, le film d'air, correspondant au deuxième milieu transparent 300, est aisément constitué lors de l'assemblage du brin 120 conducteur électrique et du premier milieu transparent 200.

Par ailleurs, l'utilisation d'adhésifs optiques 340 ainsi que d'un substrat 330 transparent sur lequel est gravée la piste conductrice, permet d'assurer une continuité optique de part et d'autre de la piste conductrice, renforçant ainsi le caractère invisible de l'antenne pour l'utilisateur regardant à travers la surface.

Dans une variante, l'ensemble est également maintenu par collage ou surmoulage de deux films 320, par exemple en plastique transparent, de part et d'autre de l'assemblage.

Dans une autre variante, les adhésifs optiques 340 ne sont disposés que d'un côté de la piste conductrice gravée. De la sorte, le brin 120 conducteur électrique peut être calé sur l'un des deux films 320.

Ainsi, lorsqu'une telle antenne est disposée sur un écran d'affichage (une surface extérieure de lecture de l'écran d'affichage correspondant à la surface 110 transparente), l'antenne 100 se trouve être plus proche de ce qui est affiché sur l'écran d'affichage. Le contenu affiché est ainsi encore moins déformé par la présence de l'antenne 100.Dans d'autres modes de réalisation, une zone surfacique du premier milieu transparent 200, 200' est polie au niveau de l'au moins une première zone de contact 210. Ainsi, un effet miroir est obtenu au niveau de l'au moins une première zone de contact 210 formant un « poli optique » entre les premier 200, 200' et deuxième 300 milieux transparents, renforçant par là-même l'aspect « verre brisé », et donc le caractère invisible du brin 120 conducteur électrique au final.

On décrit maintenant, en relation avec la **figure 4****,** une matrice de brins conducteurs électriques selon un mode de réalisation de la technique décrite.

Dans ce mode de réalisation, le premier milieu transparent 200 ou le troisième milieu transparent 360 comprend une matrice 400 de brins 120' conducteurs électriques (ici parallèles entre eux, quand bien même d'autres motifs peuvent être envisagés), chacun pouvant être réalisé selon l'un quelconque des modes de réalisation précité.

L'antenne 100 résulte alors d'une interconnexion électrique préalable d'une pluralité de brins 120' conducteurs électriques de la matrice 400.

La géométrie de l'antenne 100 implémentée sur la surface 110 en question est ainsi configurable, rendant par là-même la solution flexible et économique.

Par ailleurs, l'aspect de la surface 110 transparente se trouve uniformisé.

Dans d'autres modes de réalisation, l'antenne 100 est composée d'au moins deux brins 120, 120' conducteurs électriques (selon l'un quelconque des modes de réalisation précité) formant deux chemins électriques mis en parallèle.

De la sorte, l'impédance de l'antenne 100 devant être maintenue à une valeur cible, les dimensions de la section des brins 120, 120' conducteurs électriques mis en parallèle se trouvent être divisées dans le rapport du nombre de brins impliqués dans cette mise en parallèle. En particulier, la hauteur et/ou l'épaisseur effective de la section des brins 120, 120' conducteurs électriques en question se trouve être encore réduite, rendant l'antenne 100 ainsi obtenue encore plus discrète.

On décrit maintenant, en relation avec la **figure 5****,** une borne de paiement électronique comprenant un dispositif d'affichage intégrant une antenne conformée à une surface transparente selon un mode de réalisation de la technique décrite.

La borne de paiement 500 comprend un dispositif d'affichage 510 intégrant à la fois un écran d'affichage 520 et une antenne 100 selon l'un quelconque des modes de réalisation précité.

Plus particulièrement, une surface extérieure de lecture de l'écran d'affichage 520 correspond à la surface 110 transparente à laquelle est conformée l'antenne 100.

De la sorte, l'établissement d'un lien radiofréquence avec un dispositif de communication extérieur est optimal, l'antenne selon la technique décrite n'étant pas masquée par l'écran d'affichage.

Par ailleurs, cet effet est obtenu indépendamment de la taille de l'écran d'affichage, la dimension de l'antenne 100 n'étant imposée que par des questions d'efficacité de rayonnement, et non par la taille de l'écran d'affichage 520 comme c'est le cas lorsque l'antenne est disposée sur le pourtour de l'écran 520 comme dans les solutions connues.

Il est par ailleurs notable que l'antenne 100 selon l'invention peut être utilisée dans un dispositif d'affichage 510 comprenant un écran 520 de taille quelconque. En effet, l'utilisation d'une telle antenne 100 selon la technique décrite garantit une perturbation minimale de la visibilité des informations affichées sur l'écran, indépendamment de la taille de ce dernier.

L'antenne 100 selon l'invention peut ainsi être utilisée pour équiper d'autres types de dispositifs de paiement, comme les terminaux de paiement électroniques, ou les guichets automatiques (ou ATM pour « Automated Teller Machine » en anglais).

Ce peut être également le cas pour équiper d'autres dispositifs que ceux dédiés au paiement, par exemple pour les écrans d'affichage (e.g. un écran connecté de publicité interactive, ou d'affichage public) tels qu'on en trouve dans les abris bus par exemple.

## Revendications

1. Antenne (100) configurée pour être conformée à une surface (110) transparente, ladite antenne comprenant au moins un brin (120, 120') conducteur électrique s'étendant le long de ladite surface et étant **caractérisée en ce qu'**une section transverse dudit au moins un brin conducteur électrique présente une hauteur (h) dans une direction orthogonale à ladite surface au moins cinq fois supérieure à une largeur (w) dans une direction parallèle à ladite surface et où ledit au moins un brin conducteur électrique est en contact avec un deuxième milieu transparent (300) d'indice optique *n*₂ ≥ 1 au niveau d'au moins une deuxième zone de contact (310) s'étendant au moins en partie perpendiculairement à ladite surface,
le deuxième milieu transparent (300) étant en contact avec un premier milieu transparent (200, 200') d'indice optique *n*₁ > *n*₂ au niveau d'au moins une première zone de contact (210) s'étendant au moins en partie perpendiculairement à ladite surface,
lesdites première (210) et deuxième (310) zones de contact présentant chacune au moins une région (370, 370') en regard l'une de l'autre.

2. Antenne selon la revendication 1 dans laquelle ledit deuxième milieu transparent est de l'air.

3. Antenne selon la revendication 1 ou 2 dans laquelle une zone surfacique dudit premier milieu transparent est polie au niveau de ladite au moins une première zone de contact.

4. Antenne selon l'une quelconque des revendications 1 à 3 dans laquelle ledit
premier milieu transparent (200) comprend une matrice (400) de brins conducteurs électriques comprenant ledit au moins un brin conducteur électrique,
ladite antenne conformée résultant d'une interconnexion électrique préalable d'une pluralité de brins conducteurs électriques de ladite matrice.

5. Antenne selon l'une quelconque des revendications 1 à 4 dans laquelle ladite antenne est composée d'au moins deux brins conducteurs électriques formant deux chemins électriques mis en parallèle.

6. Antenne selon l'une quelconque des revendications 1 à 5 dimensionnée pour capter et rayonner une onde électromagnétique à une fréquence porteuse de 13,56MHz.

7. Dispositif d'affichage (510) **caractérisé en ce qu'**il comprend :
- un écran d'affichage (520) ; et
- une antenne (100) selon l'une quelconque des revendications 1 à 6 conformée à
une surface extérieure de lecture dudit écran d'affichage correspondant à ladite surface (110) transparente.

8. Dispositif (500) de paiement électronique **caractérisé en ce qu'**il comprend un dispositif d'affichage selon la revendication 7.

## Patentansprüche

1. Antenne (100), die konfiguriert ist, um einer transparenten Oberfläche (110) angepasst zu sein, wobei die Antenne mindestens einen elektrischen leitfähigen Strang (120, 120') umfasst, der sich entlang dieser Oberfläche erstreckt, und **dadurch gekennzeichnet ist, dass** ein Querschnitt des mindestens einen elektrischen leitfähigen Strangs eine Höhe (h) in einer zur Oberfläche orthogonalen Richtung fünf Mal größer als eine Breite (w) in einer zur Oberfläche parallelen Richtung aufweist, und wobei der mindestens eine elektrische leitfähige Strang in Kontakt mit einem zweiten transparenten Milieu (300) mit einem optischen Index *n*₂ ≥ 1 im Bereich von mindestens einer zweiten Kontaktzone (310) ist, die sich mindestens teilweise senkrecht zur Oberfläche erstreckt,
wobei das zweite transparente Milieu (300) in Kontakt mit einem ersten transparenten Milieu (200, 200') mit einem optischen Index *n*₁ > *n*₂ im Bereich von mindestens einer ersten Kontaktzone (210) ist, die sich mindestens teilweise senkrecht zur Oberfläche erstreckt,
wobei die erste (210) und zweite (310) Kontaktzone jeweils mindestens eine Region (370, 370') einander gegenüber aufweisen.

2. Antenne nach Anspruch 1, wobei das zweite transparente Milieu Luft ist.

3. Antenne nach Anspruch 1 oder 2, wobei eine oberflächliche Zone des ersten transparenten Milieus im Bereich der mindestens einen ersten Kontaktzone poliert ist.

4. Antenne nach einem der Ansprüche 1 bis 3, wobei das erste transparente Milieu (200) eine Matrix (400) aus elektrischen leitfähigen Strängen umfasst, die den mindestens einen elektrischen leitfähigen Strang umfassen,
wobei die angepasste Antenne aus einer vorherigen elektrischen Vernetzung einer Vielzahl von elektrischen leitfähigen Strängen der Matrix hervorgeht.

5. Antenne nach einem der Ansprüche 1 bis 4, wobei die Antenne aus mindestens zwei elektrischen leitfähigen Strängen besteht, die zwei parallel geschaltete elektrische Bahnen bilden.

6. Antenne nach einem der Ansprüche 1 bis 5, die bemessen ist, um eine elektromagnetische Welle mit einer Trägerfrequenz von 13,56 MHz zu empfangen und auszustrahlen.

7. Anzeigevorrichtung (510), **dadurch gekennzeichnet, dass** sie umfasst:
- einen Anzeigebildschirm (520); und
- eine Antenne (100) nach einem der Ansprüche 1 bis 6, die einer Außenoberfläche zum Lesen des Anzeigebildschirms entsprechend der transparenten Oberfläche (110) angepasst ist.

8. Elektronische Zahlungsvorrichtung (500), **dadurch gekennzeichnet, dass** die eine Anzeigevorrichtung nach Anspruch 7 umfasst.

## Claims

1. An antenna (100) configured to conform to a transparent surface (110), said antenna comprising at least one electrically conductive wire (120, 120') extending along said surface and being **characterized in that** a transverse section of said at least one electrically conductive wire has a height (h) in a direction orthogonal to said surface at least five times greater than a width (w) in a direction parallel to said surface and where said at least one electrically conductive wire is in contact with a second transparent medium (300) with an optical index n₂ ≥ 1 at at least one second contact area (310) extending at least partially perpendicular to said surface,
the second transparent medium (300) being in contact with a first transparent medium (200, 200') with an optical index n₁ > n₂ at at least one first contact area (210) extending at least partially perpendicular to said surface,
said first (210) and second (310) contact areas each having at least one region (370, 370') facing each other.

2. The antenna according to claim 1 wherein said second transparent medium is air.

3. The antenna according to claim 1 or 2 wherein a surface area of said first transparent medium is polished at said at least one first contact area.

4. The antenna according to any one of claims 1 to 3 wherein said first transparent medium (200) comprises a matrix (400) of electrically conductive wires comprising said at least one electrically conductive wire,
said conformal antenna resulting from a prior electrical interconnection of a plurality of electrically conductive wires of said matrix.

5. The antenna according to any one of claims 1 to 4 wherein said antenna is composed of at least two electrically conductive wires forming two electrical paths placed in parallel.

6. The antenna according to any one of claims 1 to 5 dimensioned to capture and radiate an electromagnetic wave at a carrier frequency of 13.56 MHz.

7. A display device (510) **characterized in that** it comprises:
- a display screen (520); and
- an antenna (100) according to any one of claims 1 to 6 that conforms to an outer reading surface of said display screen corresponding to said transparent surface (110).

8. An electronic payment device (500) **characterized in that** it comprises a display device according to claim 7.
